(19) Europäisches Patentamt
European Patent Office
Office européen des brevets

(11) **EP 3 297 878 B1**

(12) **EUROPÄISCHE PATENTSCHRIFT**

(45) Veröffentlichungstag und Bekanntmachung des Hinweises auf die Patenterteilung:
**06.02.2019   Patentblatt 2019/06**

(21) Anmeldenummer: **16724037.3**

(22) Anmeldetag: **20.05.2016**

(51) Int Cl.:
***B60T 7/12*** *(2006.01)*

(86) Internationale Anmeldenummer:
**PCT/EP2016/061421**

(87) Internationale Veröffentlichungsnummer:
**WO 2016/188899 (01.12.2016 Gazette 2016/48)**

(54) **AUTOMATISIERTE PARKBREMSE UND VERFAHREN ZUM BETREIBEN EINER AUTOMATISIERTEN PARKBREMSE**

AUTOMATIC PARKING BRAKE SYSTEM AND METHOD

SYSTÈME ET MÉTHODE DE FREINAGE DE PARKING

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2015   DE 102015209480**
**11.04.2016   DE 102016205985**
**19.05.2016   DE 102016208583**

(43) Veröffentlichungstag der Anmeldung:
**28.03.2018   Patentblatt 2018/13**

(73) Patentinhaber: **Robert Bosch GmbH**
**70442 Stuttgart (DE)**

(72) Erfinder:
• **WOLFF, Helmut**
**74199 Untergruppenbach (DE)**
• **ENGLERT, Andreas**
**74199 Untergruppenbach (DE)**
• **PUTZER, Tobias**
**74177 Bad Friedrichshall (DE)**

(56) Entgegenhaltungen:
**JP-A- H11 236 931      US-A1- 2010 262 329**
**US-A1- 2014 214 296**

**Beschreibung**

Die vorliegende Erfindung betrifft ein Verfahren zum Betreiben einer automatisierten Feststellbremse für ein Kraftfahrzeug mit wenigstens einer Bremsvorrichtung wobei die Feststellbremse wenigstens zwei Zustände einnehmen kann, wobei in einem ersten Zustand keine Klemmkraft mittels der Feststellbremse aufgebaut wird, und in einem zweiten Zustand eine Klemmkraft mittels der Feststellbremse aufgebaut wird, wobei ein Übergangspunkt den Übergang zwischen den zwei Zuständen definiert, ist dadurch gekennzeichnet, dass eine Identifikation des Übergangspunktes während eines Lösevorgangs der Feststellbremse erfolgt.

**Stand der Technik**

Aus dem Stand der Technik ist beispielsweise die Patentanmeldung DE 2014 102 202 52 A1 bekannt. Diese Schrift betrifft ein Verfahren zur Durchführung eines Feststellbremsvorgangs bei einem Kraftfahrzeug mit einer automatisierten Feststellbremse, wobei der Feststellbremsvorgang wenigstens zwei Phasen aufweist, wobei in einer ersten vorgelagerten Phase keine Klemmkraft durch die Feststellbremse aufgebaut wird, und in einer zweiten nachgelagerten Phase eine Klemmkraft durch die Feststellbremse aufgebaut wird, wobei die Feststellbremse einen ansteuerbaren Feststellbremsaktuator zur Erzeugung der Klemmkraft aufweist dadurch gekennzeichnet, dass eine Detektion eines Übergang von der ersten Phase zu der zweiten Phase auf Basis eines zeitlichen Verlaufs eines spezifischen Parameters einer Ansteuerung des Feststellbremsaktuators erfolgt. Hierbei erfolgt also eine Ermittlung des Übergangs von einer kraftfreien Phase hin zu einer kraftaufbauenden Phase im Rahmen eines Schließvorgangs der Feststellbremse. Ein weiteres Beispiel des Standes der Technik wird durch Dokument US 2010/262329 A1 offenbart.

Durch Funktionen, wie das hochautomatisierte Parken (Fahrer sitzt nicht im Fahrzeug), werden neue Anforderungen an die Parkbremse gestellt. Bei einem Versagen der hydraulischen Bremsvorrichtung (bspw. des ESP), dient die Parkbremse als (aus Sicherheitsgründen) notwendige Rückfallebene. Untersuchungen haben ergeben, dass hierbei zum Erfüllen der sicherheitsbedingten Anforderungen eine Aktuierungszeit von $\leq 200$ Millisekunden notwendig ist. Dieser Wert kann sich jedoch aufgrund abgeänderter Anforderungen im Bereich von $100ms \leq t \leq 700ms$ bewegen. Als Aktuierungszeit wird in diesem Fall die Zeit verstanden, die vergeht, wenn der Aktuator bestromt wird, bis letztendlich ein Klemmkraftaufbau stattfindet. Dies jedoch ist mit den marktüblichen Lösungen aktuell nicht oder nur unter großem technischem Aufwand möglich.

**Offenbarung der Erfindung**

Mittels des erfindungsgemäßen Verfahrens lassen sich unter bestimmten Annahmen die Anforderungen einer Aktuierungszeit von $\leq 200$ Millisekunden im Falle des hochautomatisierten Parkens/ Fahrens erzielen. Vorteilhaft ermöglicht das erfindungsgemäße Verfahren hierzu, eine Ermittlung eines Übergangs zwischen einer kraftabbauenden Phase und einer kraftfreien Phase im Rahmen eines Lösevorgangs der Parkbremse. Hierdurch kann die geforderte schnelle Verfügbarkeit der Feststellbremse gewährleistet werden. Dies erhöht ebenfalls die Sicherheit. Ebenfalls können geringe Unterschiede des Übergangspunktes zwischen dem Schließvorgang und dem Lösevorgang auftreten. Das erfindungsgemäße Verfahren ermöglicht daher auch eine höhere Genauigkeit bspw. bei einer Positionierung der Feststellbremse bei einem Öffnungsvorgang. Ermöglicht wird dies gemäß der Erfindung durch die im Patentanspruch 1 angegebenen Merkmale. Weitere Ausgestaltungen der Erfindung sind Gegenstand von Unteransprüchen.

Das erfindungsgemäße Verfahren zum Betreiben einer automatisierten Feststellbremse für ein Kraftfahrzeug mit wenigstens einer Bremsvorrichtung wobei die Feststellbremse wenigstens zwei Zustände einnehmen kann, wobei in einem ersten Zustand keine Klemmkraft mittels der Feststellbremse aufgebaut wird, und in einem zweiten Zustand eine Klemmkraft mittels der Feststellbremse aufgebaut wird, wobei ein Übergangspunkt den Übergang zwischen den zwei Zuständen definiert, ist dadurch gekennzeichnet, dass eine Identifikation des Übergangspunktes während eines Lösevorgangs der Feststellbremse erfolgt.

Hierunter ist zu verstehen, dass eine Feststellbremse einen Schließvorgang (zum Aufbau einer Brems- bzw. Klemmkraft) sowie einen Lösevorgang (zum Abbau einer Brems- bzw. Klemmkraft) aufweist. Die Feststellbremse wechselt hier die beiden Zustände "keine Klemmkraft aufgebaut" sowie "Klemmkraft aufgebaut". Erfindungsgemäß wird der Übergangspunkt zwischen diesen beiden Zuständen während des Lösevorgangs der Feststellbremse ermittelt. Alternativ kann der Übergangspunkt auch als Übergang der Phasen "Leerwegüberfahrung" sowie "Klemmkraftaufbau/-abbau" angesehen werden. Die Definition des Übergangspunktes kann bspw. bezogen auf den Bremskolbens (wie bspw. dessen relative oder absolute Position oder dessen Verfahrweg aus dem Ausgangspunkt) oder bezogen auf eine andere Größe (wie Drehwinkel der Spindel oder des Aktuators) erfolgen.

Die Ermittlung des Übergangspunktes während des Lösevorgangs bietet eine Vielzahl an Vorteilen, insbesondere im Vergleich zu einer Ermittlung des Übergangs während dem Schließvorgang. Durch eine Ermittlung während des Lösevorgangs kann die Sicherheit des Systems gesteigert werden. Bspw. ist es somit möglich direkt zu überprüfen, ob der Lösevorgang tatsächlich funktioniert und die vorhandene Klemmkraft abgebaut wird. Ebenfalls bestehen Situationen und Anwendungsfälle, in welchen die Kenntnis des Übergangspunktes bei einem Lösevorgang vorteilhaft ist. In solch einem Fall könnte durch die Ermittlung des Übergangspunktes während des Lösens eine Ermittlung des Übergangspunktes während des Öffnens sowie eine mittelfristige Speicherung des Wertes entfallen, welche notwendig wäre, um den ermittelten Wert auch während dem Lösevorgang abfragen zu können. Weiterhin kann durch eine zusätzliche Ermittlung während des Schließens (d.h. Ermittlung sowohl beim Lösevorgang als auch beim Schließvorgang) kleine Unterschiede im Vergleich mit dem während des Schließens ermitteln Übergangspunktes identifiziert und entsprechend berücksichtigt werden. Hierdurch ist sowohl ein genaueres Ergebnis als auch eine Kontrolle eines erzielten Ergebnisses möglich.

In einer vorteilhaften Ausführungsform ist das Verfahren dadurch gekennzeichnet, dass die Identifikation des Übergangspunktes auf Basis eines zeitlichen Verlaufs einer die Klemmkraft der Feststellbremse repräsentierenden Größe erfolgt.

Hierunter wird verstanden, dass eine Größe definiert wird, anhand welcher die mittels der Feststellbremse aufgebrachte Brems- und/oder Klemmkraft abgeschätzt werden kann. Eine derartige Größe kann bspw. eine übergeordnete Größe, wie das Motormoment eines als Elektromotor ausgebildeten Feststellbremsaktuators sein. Vorteilhaft ist die gewählte Größe einfach und sicher zu überprüfen. Das Verfahren detektiert also eine die Klemmkraft repräsentierende Größe und wertet deren Verlauf aus. Ein Verlauf ist bestimmt durch die Berücksichtigung eines sich zeitlich entwickelnden Wertes. Durch die Auswertung des Verlauf kann vorteilhaft eine höhere Sicherheit und Ergebnisgüte erzielt werden. Hierdurch ist bspw. auch eine Extrapolation auf Basis bisheriger Werte möglich, um bspw. Aussagen bzgl. zukünftiger Entwicklungen zu erhalten. Ebenfalls kann eine Interpolation zwischen bisherigen Werten erfolgen, um bspw. "Ausreißer" zu identifizieren und zu neutralisieren.

In einer möglichen Ausgestaltung ist das Verfahren dadurch gekennzeichnet, dass die Identifikation des Übergangspunktes während einer Einschaltphase ausgesetzt wird.

Hierunter wird verstanden, dass nicht der gesamte Lösevorgang bei der Ermittlung des Übergangspunktes berücksichtigt wird. Bspw. ist es möglich, dass bei dem Verfahren gemessene Größenwerte eines bestimmten Intervalls bei der Ermittlung des Übergangspunktes nicht berücksichtigt werden. Alternativ ist auch ein Aussetzen der Messung der Größe denkbar. Ein Lösevorgang einer Feststellbremse gliedert sich bspw. in die Phasen: Einschaltphase, Kraftabbauphase, Übergangsphase und Leerwegphase. Vorteilhaft wird dabei die Einschaltphase des Feststellbremsaktuators ausgeblendet. Die Einschaltphase eines Elektromotors ist bspw. durch einen Einschaltpeak hinsichtlich der Stromwerte gekennzeichnet. Dieser kann jedoch zu einer Verfälschung der Auswertung führen. Daher wird vorteilhaft die während des Einschaltpeaks gemessenen Werte nicht bei der Auswertung berücksichtigt, bzw. während der Einschaltphase keine Messung durchgeführt. Dies kann bspw. mittels eines zeitlichen Faktors ermöglicht werden. Hierbei erfolgt bspw. keine Berücksichtigung von Messwerten der ersten 10 Millisekunden des Einschaltvorgangs. Vorteilhaft wird hierdurch die Ergebnisqualität und Sicherheit bei der Identifikation des Übergangspunktes erhöht.

In einer bevorzugten Ausführung ist das Verfahren dadurch gekennzeichnet, dass die Identifikation des Übergangspunktes begonnen wird, wenn die die Klemmkraft der Feststellbremse repräsentierenden Größe unterhalb eines definierten Schwellenwerts liegt.

Hierunter wird ebenfalls verstanden, dass nicht der gesamte Lösevorgang bei der Ermittlung des Übergangspunktes berücksichtigt wird. Insbesondere werden die bei dem Verfahren gemessenen Größenwerte bei der Ermittlung des Übergangspunktes erst berücksichtigt, wenn diese eine bestimmte Bedingung erfüllen. Eine solche Bedingung kann ein quantitativer Faktor sein, so dass keine Berücksichtigung von Messwerten erfolgt welche über einer definierten Höhe liegen. Die Identifikation des Übergangspunktes wird damit vorteilhaft erst dann begonnen, wenn der Werteverlauf der die Klemmkraft repräsentierenden Größe unterhalb eines definierten Schwellenwertes liegt. Hierdurch kann ein wie oben beschriebener Einschaltpeak ausgeschlossen werden. Weiterhin wird hierdurch eine einfache Einschränkung ermöglicht, welche trotzdem eine hohe Sicherheit bietet.

Die Bedingung für einen Start des Vorgehens zur Identifikation des Übergangspunktes, bei einer Ausblendung der Einschaltphase, ist damit bspw. wie folgt:

$$\text{Bedingung 1:} \qquad i(t) < i(\text{Grenzwert})$$

Somit beginnt die Erkennung erst, wenn der Einschaltpeak abgeklungen und/oder der größte Anteil der Klemmkraft abgebaut wurde.

In einer vorteilhaften Ausgestaltung ist das Verfahren dadurch gekennzeichnet, dass bei der Identifikation des Übergangspunktes ermittelt wird, ob ein stetiger Rückgang eines Werteverlaufs der die Klemmkraft der Feststellbremse repräsentierenden Größe vorliegt, wobei ein stetiger Rückgang dann erkannt wird, wenn mehrere, insbesondere 3 oder 4, fallende zeitlich direkt aufeinander folgende Werte ermittelt werden.

Hierunter wird verstanden, dass für die Ermittlung des Übergangspunktes analysiert wird, ob ein spezifischer Rückgang der gemessenen Größe, bspw. des Stromwertes, vorliegt. Ein spezifischer Rückgang kann derart definiert sein, dass der Verlauf ein stetiges Absinken ist. Ein solches wird bspw. dann angenommen, wenn eine Vielzahl an gemessener Größenwerte eine fallende Höhe aufweisen. Eine Vielzahl kann bspw. bei 4 gemessenen Werten mit geringer werdenden Größenwerten gesehen werden. Durch die Verwendung mehrere Werte kann die Sicherheit der Auswertung erhöht werden. Wobei durch die Verwendung der besagten 4 gemessenen Werte, jedoch zugleich eine schnelle Identifikation bei ausreichend hoher Sicherheit ermöglicht wird. Ein stetiger Rückgang wird als sicher angenommen, d.h. die Schätzung als robust, wenn der Strom an mehreren, insbesondere mindestens vier, aufeinanderfolgenden Punkten stetig fällt. Wenn alle 5 Millisekunden eine Messung erfolgt, kann vorteilhaft in einer Zeitspanne von 20 Millisekunden eine Änderung des Stromwerteverlaufs mit einer hohen Sicherheit für eine valide Erkennung identifiziert werden.

Das heißt, der Strom muss z.B. an mindestens 4 aufeinanderfolgenden Punkten stetig abklingen, damit ein Kraftabbau gesichert vorliegt. Die Bedingung für einen stetigen Rückgang ist daher bspw. wie folgt.

$$\text{Bedingung 2:} \qquad i(k) < i(k-1) < i(k-2) < i(k-3)$$

Weiterhin ist vorteilhaft denkbar, dass bei einer definierten Anzahl an gemessenen geringer werdenden Größenwerten direkt auf einen Übergangspunkt geschlossen wird. Dies ermöglicht ein schnelles und einfaches Abschätzen eines Endes der Kraftabbauphase, bzw. Abschätzen des Übergangspunktes.

In einer alternativen Weiterbildung ist das Verfahren dadurch gekennzeichnet, dass der Übergangspunkt erkannt wird, wenn eine Änderung eines Werteverlaufs der die Klemmkraft der Feststellbremse repräsentierenden Größe ermittelt wird.

Hierunter wird verstanden, dass die Analyse des Werteverlaufs insbesondere darauf zielt eine spezifische Charakteristik des Werteverlaufs zu identifizieren. Wird eine derartig vorab definierte Charakteristik im Werteverlauf gefunden, wird auf einen Übergangspunkt geschlossen. Eine derartige Charakteristik kann insbesondere in einer Änderung des Werteverlaufs liegen. Bspw. kann ein Übergang von der Kraftabbauphase in die Leerwegphase definiert werden, wenn ein "Knickpunkt" in dem Klemmkraftverlauf identifiziert wird.

In einer bevorzugten Ausgestaltung ist das Verfahren dadurch gekennzeichnet, dass der Übergangspunkt erkannt wird, wenn ein geringer werdender Rückgang eines Werteverlaufs der die Klemmkraft der Feststellbremse repräsentierenden Größe ermittelt wird, wobei ein geringer werdender Rückgang erkannt wird,

- wenn mehrere, insbesondere 3, geringer werdende Differenzbeträge (d1, d2, d3) von zeitlich direkt aufeinander folgenden Werten ermittelt werden, und/oder
- wenn mehrere, insbesondere 3, Differenzbeträge (d1, d2, d3) der zeitlich direkt aufeinander folgenden Werte jeweils niedriger als ein dem jeweiligen Differenzbetrag (d1, d2, d3) zugeordneten Schwellenwert (a, b, c) sind, wobei insbesondere die Schwellenwerte (a, b, c) gleich sind oder eine Verringerung der Schwellenwerte (a, b, c) entsprechend dem zeitlichen Rang der zugeordneten Differenzbeträge (d1, d2, d3) vorliegt.

Hierunter wird verstanden, dass dann auf einen Übergang von der Kraftabbauphase zur Leerwegphase geschlossen wird, wenn ein abflachender Kraftabbau festgestellt wird. Ein abflachender Kraftabbau, auch abklingender Kraftabbau genannt, wird dann erkannt wenn mehrere, insbesondere 3, geringer werdende Differenzbeträge - der zeitlich direkt aufeinander folgenden Stromwerte einer Ansteuerung des Feststellbremsaktuators - ermittelt werden. Als Differenzbeträge werden definiert:

$$d1 = i(k-3) - i(k-2);$$

$$d2 = i(k-2) - i(k-1);$$

$$d3 = i(k-1) - i(k)$$

Die Bedingung wie oben beschrieben lässt sich damit wie folgt formulieren:

$$\text{Bedingung 3:} \quad d1 > d2 > d3$$

In einer alternativen Ausgestaltung wird ein abflachender Kraftabbau dann erkannt wenn mehrere, insbesondere 3, Differenzbeträge - der zeitlich direkt aufeinander folgenden Stromwerte einer Ansteuerung des Feststellbremsaktuators - jeweils unter einem dem Differenzbetrag zugeordneten Schwellenwert liegen, wobei die Schwellenwerte gleich sind oder ein stetiger Rückgang der Schwellenwerte entsprechend dem zeitlichen Rang der zugeordneten Differenzbeträge vorliegt.

$$\text{Bedingung 4:} \quad d1 < a \text{ UND } d2 < b \text{ UND } d3 < c$$

$$\text{mit } a >= b >= c$$

Wobei ein "=" als linearer Rückgang der Kraft, bzw. des Stroms sowie ein ">" als ein progressiver Rückgang der Kraft, bzw. des Stroms zu deuten ist.

Typische Werte für die Schwellenwerte a, b, c bei einer Stromänderung sind:

a = 0,3 bis 1 A
b = 0,2 bis 1 A
c = 0,1 bis 1 A

Die Elemente a, b, c sind hierbei als Schwellenwerte zu verstehen, die an das bestehende Bremssystem bzw. den jeweiligen Komponentenverhalten angepasst werden können. Bei der Wahl der Parameter gilt folgender Zusammenhang: je kleiner die Werte von a, b, c desto feinfühliger die Erkennung; je kleiner die Werte von a, b, c desto anfälliger ist die Erkennung gegenüber Störungen.

Selbstverständlich kann auch vorgesehen sein, dass ein Übergangspunkt dann identifiziert wird, wenn ein stetiger und abflachender Rückgang der Stromwerte ermittelt wird. Das heißt, ein Übergang wird bspw. erst dann erkannt, wenn sowohl die Bedingung 1 und 2 sowie auch Bedingung 3 oder/und Bedingung 4 erfüllt sind.

In einer vorteilhaften Ausführung ist das Verfahren dadurch gekennzeichnet, dass zur Identifikation des Übergangspunktes der zeitliche Verlauf der die Klemmkraft der Feststellbremse repräsentierenden Größe während einer Kraftabbauphase ausgewertet wird.

Hierunter wird verstanden, dass für die Ermittlung des Übergangspunktes der Werteverlauf der Größe während der Kraftabbauphase der Feststellbremse analysiert wird. Hierdurch wird ein frühzeitiges Erkennen des Übergangspunktes ermöglicht. Sobald die ermittelten Kennwerte darauf deuten, dass die gesetzten Bedingungen erfüllt sind, die einen Übergang definieren, wird die Phase nicht mehr als Kraftabbauphase sondern als Übergangsphase definiert. Die Übergangsphase ist damit zwischen der Kraftabbauphase und der Leerwegphase positioniert. Weiterhin ist sie im Vergleich mit den anderen Phasen zeitlich gesehen kurz. Die Bezeichnung als Übergangs-"phase" erfolgt, da ein Übergang zwischen Kraftabbau und Leerweg faktisch häufig nicht punktuell zu einem Zeitpunkt, sondern nur verschliffen (d.h. "verschwommen") über ein Zeitintervall ermittelbar ist.

Ein einer möglichen Ausgestaltung ist das Verfahren dadurch gekennzeichnet, dass bei der Ermittlung der die Klemmkraft der Feststellbremse repräsentierenden Größe

- ein Stromwert eines Feststellbremsaktuators und/oder
- eine Spannung eines Feststellbremsaktuators und/oder
- eine Motorwinkelgeschwindigkeit eines Feststellbremsaktuators berücksichtigt wird.

Hierunter ist zu verstehen, dass messbare Größen wie Stromwert, Spannung und/oder Motorwinkelgeschwindigkeiten eines Aktuators geeignet sind als eine die Klemmkraft der Feststellbremse repräsentierende Größe verwendet zu werden. Selbstverständlich können auch mehrere Größen berücksichtigt werden, um die die Klemmkraft repräsentierende Größe zu bilden. Vorteilhaft kann durch die Messbarkeit der Größen die Validität erhöht werden. Weiterhin vorteilhaft handelt es sich dabei um eine Größe, die bereits im System analysiert wird. Hierdurch kann zusätzlicher Aufwand vermieden oder zumindest verringert werden. Neben der direkten Berücksichtigung der gemessenen Werte, kann auch vorteilhaft bspw. eine zeitliche Ableitung der Werteverläufe erfolgen und berücksichtigt werden.

In einer bevorzugten Weiterbildung ist das Verfahren dadurch gekennzeichnet, dass der ermittelte Übergangspunkt bei einem Betreiben der Feststellbremse, insbesondere als Referenzwert, berücksichtigt wird.

Hierunter ist zu verstehen, dass beim weiteren Betreiben der Feststellbremse die Kenntnis über den Übergangspunkt verwendet wird. Hierdurch kann vorteilhaft das Betreiben der Feststellbremse darauf angepasst werden.

Bspw. kann die identifizierte Position des Übergangs zwischen der Kraftabbauphase und dem Leerweg gespeichert werden und die Steuerung der Feststellbremse darauf angepasst werden.

In einer möglichen Ausgestaltung ist das Verfahren dadurch gekennzeichnet, dass unter Berücksichtigung des ermittelten Übergangspunktes erfolgt:

- ein Positionieren der Feststellbremse, und/oder
- ein Positionieren der Feststellbremse direkt aus der Kraftabbauphase der Feststellbremse heraus und/oder
- ein Positionieren der Feststellbremse direkt von einem Endpunkt der Feststellbremse heraus und/oder
- ein Positionieren der Feststellbremse in einer Leerwegphase und/oder
- ein Positionieren der Feststellbremse in einem Bremsstartpunkt, wobei insbesondere ein reduzierter Leerweg der Feststellbremse eingestellt, wobei insbesondere der reduzierte Leerweg im Vergleich zum regulären Leerweg reduziert ist.

Hierunter wird verstanden, dass die Position des ermittelten Übergangspunktes bei einer Vielzahl an Operationen der Feststellbremse verwendet werden kann. Hierbei sei ein Positionieren der Feststellbremse genannt. Die Positionierung kann sich bspw. auf das Einstellen, d.h. Anfahren, der Parkbremse eines Bremsstartpunkts, eines Ausgangspunkts oder weiterer Punkte beziehen. Vorteilhaft kann durch die Kenntnis des Übergangspunktes hierbei eine verbesserte Genauigkeit erreicht werden.

Weiterhin sei ein Positionieren der Feststellbremse direkt aus einem beliebigen Punkt der Kraftabbauphase heraus genannt. Bspw. kann die Positionierung direkt aus der geschlossenen Position (d.h. aus dem Endpunkt) der Feststellbremse heraus erfolgen. Dies erhöht die Schnelligkeit die gewünschte Position zu erreichen und verbesserte damit die Einsatzfähigkeit der Feststellbremse. Auch ist dies ein Sicherheitsgewinn, da die Feststellbremse schneller zur Verfügung steht und für eine erneute Aktivierung, bspw. einen Klemmkraftaufbau, angesprochen werden kann.

Weiterhin ist ein Positionieren der Feststellbremse in einer Leerwegposition möglich. Die Positionierung erfolgt also in einer offenen Position der Feststellbremse bei welcher ein definierter Leerweg eingestellt wird. Hierunter ist bspw. die Positionierung der Feststellbremse ausgehend von einem Endpunkt auf den Bremsstartpunkt zu verstehen. Dies bedeutet, dass die Parkbremse einen Lösevorgang nicht vollständig bis zum Ausgangspunkt durchführen muss, um die Feststellbremse anschließend im Bremsstartpunkt zu positionieren. Durch die Kenntnis des Übergangspunktes kann die Feststellbremse direkt auf dem Bremsstartpunkt positioniert werden. Dies ist eine deutliche Zeitersparnis und damit Sicherheitsgewinn, da eine schnellere Aktivierung der Feststellbremse möglich wird.

Erfindungsgemäß ist ein Steuergerät zum Betreiben einer automatisierten Feststellbremse für ein Kraftfahrzeug vorgesehen, wobei die Feststellbremse wenigstens zwei Zustände einnehmen kann, wobei in einem ersten Zustand keine Klemmkraft mittels der Feststellbremse aufgebaut wird, und in einem zweiten Zustand eine Klemmkraft mittels der Feststellbremse aufgebaut wird, wobei ein Übergangspunkt den Übergang zwischen den Zuständen definiert, dadurch gekennzeichnet, dass das Steuergerät Mittel aufweist und eingerichtet ist, um eine Übergangspunkt während einem Lösevorgang der Feststellbremse zu identifizieren.

Hierunter wird verstanden, dass ein Steuergerät und/oder eine sonstige Recheneinheit für das Kraftfahrzeug vorgesehen ist, welches ausgestaltet ist, das heißt eingerichtet ist und/oder Mittel aufweist, ein - wie zuvor beschriebenes - Verfahren durchzuführen oder zu unterstützen.

Erfindungsgemäß ist weiterhin eine automatisierte Feststellbremse für ein Kraftfahrzeug vorgesehen, wobei die Feststellbremse wenigstens zwei Zustände einnehmen kann, wobei in einem ersten Zustand keine Klemmkraft mittels der Feststellbremse aufgebaut wird, und in einem zweiten Zustand eine Klemmkraft mittels der Feststellbremse aufgebaut wird, wobei ein Übergangspunkt den Übergang zwischen den Zuständen definiert, dadurch gekennzeichnet, dass die Feststellbremse Mittel aufweist und eingerichtet ist, um einen Übergangspunkt während einem Lösevorgang der Feststellbremse zu identifizieren.

Hierunter wird verstanden, dass eine Feststellbremse für das Kraftfahrzeug vorgesehen ist, welche ausgestaltet ist, das heißt eingerichtet ist und/oder Mittel aufweist, ein - wie zuvor beschriebenes - Verfahren durchzuführen oder zu unterstützen.

## Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:

Fig. 1 eine schematische Schnittansicht einer Bremsvorrichtung mit einer automatisierten Feststellbremse in "motor on caliper" Bauweise; und

Fig. 2 einen charakteristischen Strom- und Klemmkraftverlauf bei einem Lösevorgang, und

Fig. 3 einen idealisierten Verlauf eines Motorstroms über die Zeit bei einem Rückgang des Motormoments sowie die Nachbarschaftsbeziehungen der Messpunkte, und

Fig. 4 ein Ablaufdiagramm einer beispielhaften Identifikation des Übergangspunktes, und

Fig. 5 eine Positionierung der Parkbremse nach einem Lösevorgang sowie einen wegabhängigen Verlauf der elektromechanischen Klemmkraft.

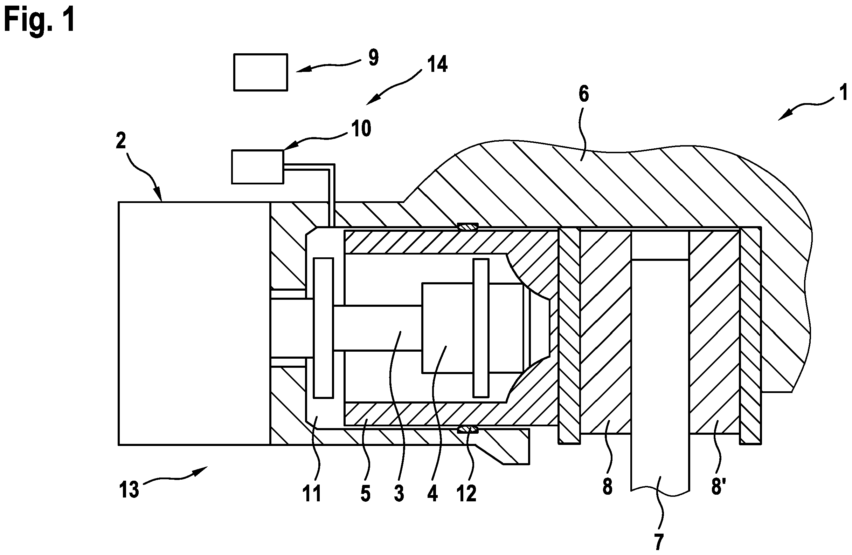

Fig. 1 zeigt eine schematische Schnittansicht einer Bremsvorrichtung 1 für ein Fahrzeug. Die Bremsvorrichtung 1 weist dabei eine automatisierte Feststellbremse 13 auf (auch automatische Feststellbremse oder automatisierte Parkbremse, kurz APB genannt), die mittels eines Aktuators 2 (Elektromotor), eine Klemmkraft zum Festsetzen des Fahrzeugs ausüben kann. Der Aktuator 2 der dargestellten elektromechanischen Feststellbremse 13 treibt hierfür eine in einer axialen Richtung gelagerte Spindel 3, insbesondere eine Gewindespindel 3, an. An ihrem dem Aktuator 2 abgewandten Ende ist die Spindel 3 mit einer Spindelmutter 4 versehen, die im zugespannten Zustand der automatisierten Feststellbremse 13 an dem Bremskolbens 5 anliegt. Die Feststellbremse 13 übertragt auf diese Weise elektromechanisch eine Kraft auf die Bremsbeläge 8, 8', bzw. die Bremsscheibe 7. Die Spindelmutter liegt dabei an einer inneren Stirnseite des Bremskolbens 5 (auch Rückseite des Bremskolbenbodens oder innerer Kolbenboden genannt) an. Die Spindelmutter 4 wird bei einer Drehbewegung des Aktuators 2 und einer resultierenden Drehbewegung der Spindel 3 in der axialen Richtung verschoben. Die Spindelmutter 4 und der

Bremskolben 5 sind in einem Bremssattel 6 gelagert, der eine Bremsscheibe 7 zangenartig übergreift.

Zu beiden Seiten der Bremsscheibe 7 ist jeweils ein Bremsbelag 8, 8' angeordnet. Im Fall eines Zuspannvorgangs der Bremsvorrichtung 1 mittels der automatisierten Feststellbremse 13 dreht sich der Elektromotor (Aktuator 2), woraufhin die Spindelmutter 4 sowie der Bremskolben 5 in der axialen Richtung auf die Bremsscheibe 7 zubewegt werden, um so eine vorbestimmte Klemmkraft zwischen den Bremsbelägen 8, 8' und der Bremsscheibe 7 zu erzeugen. Aufgrund des Spindelantriebs und der damit verbundenen Selbsthemmung wird eine bei der Feststellbremse 13 mittels einer Ansteuerung des Elektromotors erzeugten Kraft auch bei einer Beendigung der Ansteuerung weiter gehalten.

Die automatisierte Feststellbremse 13 ist bspw. wie abgebildet als "motor on caliper" System ausgebildet und mit der Betriebsbremse 14 kombiniert. Man könnte die Feststellbremse 13 auch als in das System der Betriebsbremse 14 integriert ansehen. Sowohl die automatisierte Feststellbremse 13 als auch die Betriebsbremse 14 greifen dabei auf denselben Bremskolben 5 sowie denselben Bremssattel 6 zu, um eine Bremskraft auf die Bremsscheibe 7 aufzubauen. Die Betriebsbremse 14 besitzt jedoch einen separaten Aktuator 10, bspw. eine Fußbremspedal mit einem Bremkraftverstärker. Die Betriebsbremse 14 ist in Fig. 1 als hydraulisches System ausgestaltet, wobei der Aktuator 10 durch die ESP-Pumpe oder einen elektromechanischen Bremskraftverstärker (bspw. Bosch iBooster) unterstützt oder durch diese umgesetzt werden kann. Auch weitere Ausführungsformen des Aktuators 10 sind denkbar, bspw. in Form einer sogenannten IPB (Integrated Power Brake), welche im Grundsatz ein Brake-by-Wire-System darstellt, bei welchem ein Plunger benutzt wird, um hydraulischen Druck aufzubauen. Bei einer Betriebsbremsung wird eine vorbestimmte Klemmkraft zwischen den Bremsbelägen 8, 8' und der Bremsscheibe 7 hydraulisch aufgebaut. Zum Aufbau einer Bremskraft mittels der hydraulischen Betriebsbremse 14 wird ein Medium 11, insbesondere eine im Wesentlich inkompressible Bremsflüssigkeit 11, in einen durch den Bremskolben 5 und den Bremssattel 6 begrenzten Fluidraum gepresst. Der Bremskolben 5 ist gegenüber der Umgebung mittels eines Kolbendichtring 12 abgedichtet.

Die Ansteuerung der Bremsaktuatoren 2 und 10 erfolgt mittels einer oder mehrere Endstufen, d.h. mittels eines Steuergeräts 9, bei dem es sich bspw. um ein Steuergerät eines Fahrdynamiksystems, wie ESP (elektronisches Stabilitätsprogramm) oder ein sonstiges Steuergerät handeln kann.

Bei einer Ansteuerung der automatisierten Feststellbremse 13 müssen zuerst der Leerweg bzw. das Lüftspiel überwunden werden, bevor eine Bremskraft aufgebaut werden kann. Als Leerweg wird bspw. der Abstand bezeichnet, den die Spindelmutter 4 durch die Rotation der Spindel 3 überwinden muss, um in Kontakt mit dem Bremskolben 5 zu gelangen. Als Lüftspiel wird der Abstand zwischen den Bremsbelägen 8, 8' und der Bremsscheibe 7 bei Scheibenbremsanlagen von Kraftfahrzeugen bezeichnet. Dieser Vorgang dauert in Bezug auf die Gesamtansteuerung, insbesondere bei der automatisierten Feststellbremse 13, in der Regel relativ lang. Am Ende einer derartigen Vorbereitungsphase sind die Bremsbeläge 8, 8' an die Bremsscheibe 7 angelegt und der Kraftaufbau beginnt bei einer weiteren Ansteuerung. Fig. 1 zeigt den Zustand des bereits überwundenen Leerwegs und Lüftspiels. Hierbei sind die Bremsbeläge 8, 8' an die Bremsscheibe 7 angelegt und sämtliche Bremsen, d.h. die Feststellbremse 13 als auch die Betriebsbremse 14, können bei einer folgenden Ansteuerung sofort eine Bremskraft an dem entsprechenden Rad aufbauen. Die Beschreibungen zu Lüftspiel gelten in analoger Weise auch für die Betriebsbremse 14, wobei jedoch aufgrund der hohen Druckaufbaudynamik die Überwindung eines Leerwegs einen geringeren Zeitaufwand darstellt als bei der Feststellbremse 13.

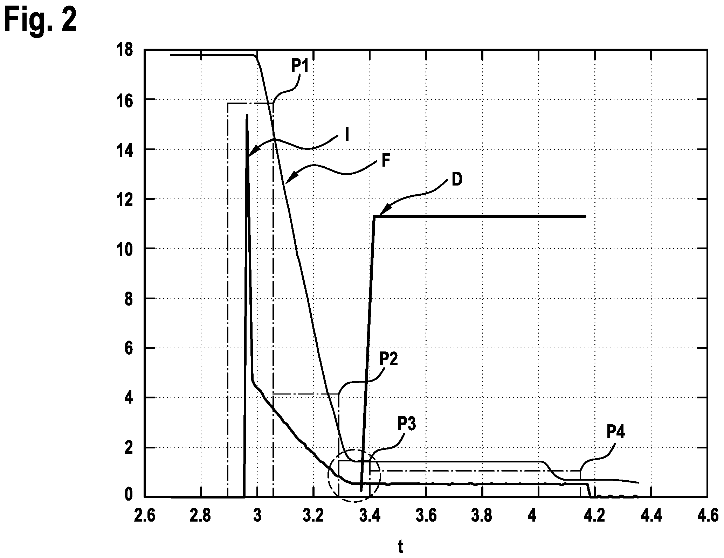

Das beschriebene Verfahren kann zur Erkennung des Übergangspunktes die auf dem Steuergerät 9 abgetasteten Stromsignale der Motor-Getriebe-Einheit der der automatischen Feststellbremse 13 nutzen. Die Figur 2 zeigt einen beispielhaften Motorstromverlauf I sowie Kraftverlauf F der Feststellbremse 13 über die Zeit t bei einem Lösevorgang einer automatisierten Feststellbremse 13. Als Kraft F soll die an der Radbremse anliegende Klemmkraft verstanden werden, die mittels der Feststellbremse 13 im geschlossenen Zustand erzielt wird. Ebenfalls ist der Stromverlauf I gezeigt, welcher hier im 10ms Raster abgetastet auf dem Steuergerät verfügbar ist. Die dargestellte Kurve D zeigt eine Detektion des Übergangspunktes von dem Klemmkraftabbau zum Leerweg mittels eines Detektionssignals an. Wurde der Übergangspunkt erfasst, springt das Signal auf den Wert 10.

Der dargestellte Lösevorgang startet aus dem geschlossenen Zustand der Feststellbremse 13. Hierbei liegt eine hohe Klemmkraft F vor. Da die Feststellbremse 13 selbsthemmend ist, ist hierfür kein Motorstrom I notwendig. In der Einschaltphase P1 wird der Aktuator 2 erstmals in Löserichtung bestromt und der Parkbremssteller, das heißt die Spindelmutter 4 die über die Spindel 3 mittels des Aktuators 1 der Feststellbremse 13 angetrieben wird, wird aktiviert. Aufgrund des Aktivierens des Aktuators 2 erfolgt ein hoher punktueller Stromwert I (auch "Einschaltpeak" genannt). Zunächst ist jedoch der Algorithmus zur Erkennung des Übergangspunktes entsprechend der Bedingung 1 ausgeblendet. Wäre dies nicht der Fall, so könnte der Algorithmus den Übergang des Einschaltpeaks in die Kraftabbauphase P2 (bei etwa 3 Sekunden) als Knickpunkt im Lösevorgang deuten.

Nachfolgend wird durch die Bewegung der Feststellbremse 13 in Löserichtung die Klemmkraft F zwischen der Spindelmutter 4 und den Bremsbelägen 8, 8', bzw. zwischen den Bremsbelägen 8, 8' und der Bremsscheibe 7 abgebaut. Eine Reduktion zeigt sich auch bei dem Stromwert I in der Kraftabbauphase P2, der einem Klemmkraftabbau entspricht. Während der Kraftabbauphase P2 ist der Stromverlauf I nahezu linear. Das heißt es wird die Bedingung 2 des stetigen Rückgangs erfüllt, jedoch nicht die Bedingung 3 des geringer werdenden Rückgangs. Daher erfolgt - entsprechend der dargestellten Ausführungsformkeine Identifikation eines Übergangspunktes.

In der Übergangsphase P3 erfolgt anschließend der Übergang von der Klemmkraftabbauphase P2 in die Leerwegphase P4. Hierbei gilt es den dargestellten "Knickpunkt" des Stromverlaufs I möglichst genau zu erkennen, das heißt den Übergangspunkt von dem Klemmkraftabbau in den Leerweg zu identifizieren. Grundsätzlich ist zu erwähnen, dass es keinen eindeutigen Fixpunkt für diesen Knickpunkt gibt. Der Knickpunkt lässt sich, wie in Fig. 2 zu erkennen ist, eher in einem spezifischen Zeitfenster ausmachen. Das heißt, der Knickpunkt ist nur verschliffen wahrnehmbar. Die anschließende Phase P4 beschreibt die Leerwegphase in der die Spindelmutter 4 den nötigen Leerweg für eine restbremsmomentfreie Bremsvorrichtung 1 aufbaut.

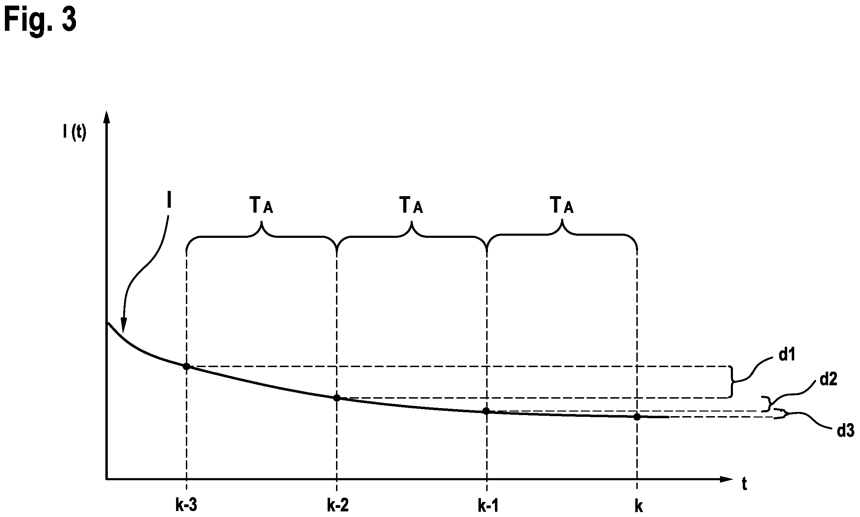

Die Fig. 3 zeigt einen Stromverlauf I über die Zeit t, wie ein solcher bspw. durch einen Abbau einer Klemmkraft F mittels eines als Elektromotor ausgebildeten Aktuators 2 der Feststellbremse 13 entsteht. Der Stromverlauf I ist schematisch idealisiert dargestellt. Weiterhin sind hierbei die Messpunkte k-3, k-2, k-1, k eingezeichnet. Diese Datenpunkte sind nun die digital vorliegenden Datenpunkte des Motorstromsignals selbst. Die Messung der Datenpunkte erfolgt jeweils mit einem äquidistanten zeitlichen Abstand $T_A$ zwischen den Messpunkten k-3, k-2, k-1, k. Die Stromsignale stehen abgetastet in einem bestimmten Zeitraster (hier beispielhaft 10ms) zur Verfügung. Darüber hinaus verdeutlicht Fig. 3 die Differenz d, welche zwischen zwei benachbarten Messpunkten der Stromwerte I vorliegt. Hierfür sind die Stromwertdifferenzen d1, d2, d3 eingezeichnet. Die möglichst exakte Erkennung des Übergangspunktes nutzt eine Auswertung der Nachbarschaftsbeziehungen zwischen den gemessenen und digital auf dem Steuergerät vorliegenden Datenpunkten des Motorstroms im Lösevorgang.

Beispielsweise wird eine Stromwertänderung erkannt, wenn ein stetiger Rückgang der zugrundeliegenden Messgrößen, d.h. der Stromwerte I, ermittelt wird. Eine Stetigkeit wird bspw. dann erkannt, wenn mehrere, bspw. 4, fallende zeitlich direkt aufeinander folgende Messgrößen ermittelt werden. Fig. 3 verbildlicht die Darstellung eines fallenden Stromverlaufs I über die Zeit t. Weiterhin ist über die Y-Achse dargestellt, dass der Rückgang der Stromwerte einen abflachenden Verlauf aufweist, d.h. ein abklingendes Motorstromsignal vorliegt. Dies ist dadurch erkenntlich, dass d1 größer ist als d2, und wiederum d2 größer ist als d3. Dies kann als ein Indiz für einen abklingenden Rückgang der Messwerte angesehen werden. Dies wiederum ist ein Indiz für einen Übergang von einer Kraftabbauphase in den Leerweg.

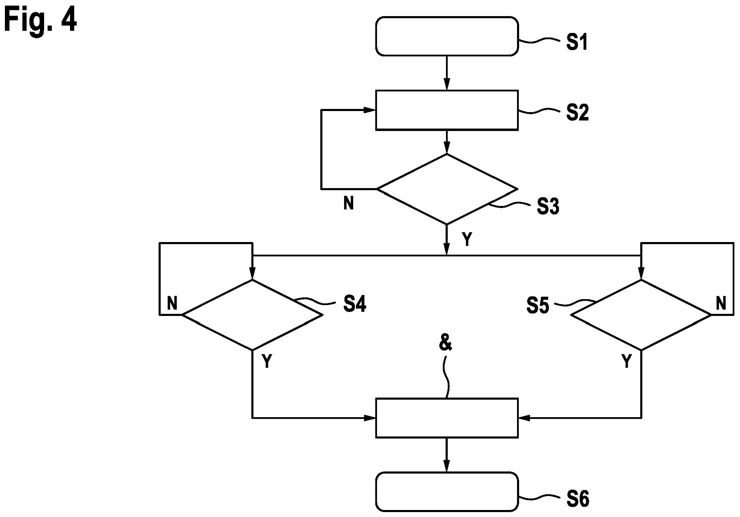

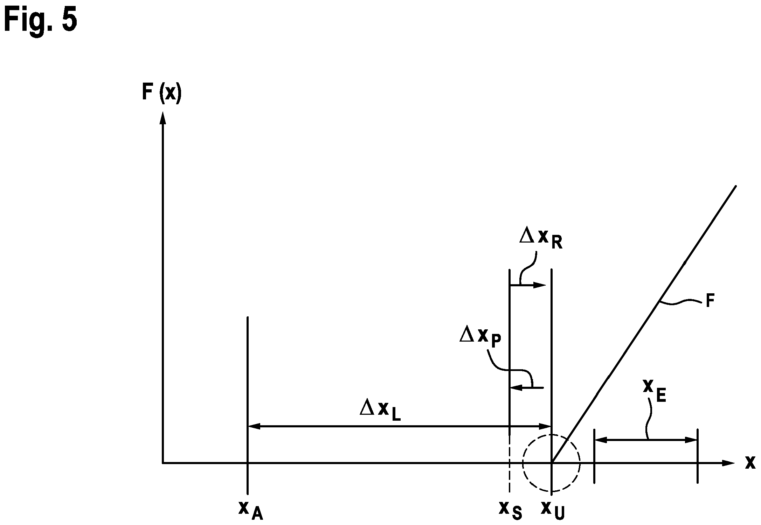

Die Fig. 4 zeigt ein Ablaufdiagramm einer beispielhaften Identifikation des Übergangspunktes zwischen der Kraftabbauphase und der Leerwegphase. Das Verfahren geht von einem zugespannten Zustand der Feststellbremse 13 aus, bei der der Bremskolben seine Endposition einnimmt (siehe $x_E$ in Fig. 5). Im ersten Schritt S1 wird der Lösevorgang begonnen. Der Bremskolben wird durch Ansteuerung des Aktuators 2 in Richtung einer bremsmomentfreien Ausgangsposition (siehe $x_A$ in Fig. 5) verstellt. Die geschlossene Feststellbremse 13 wird dabei gelöst, wodurch es in zu einem Abbau der Klemmkraft (siehe F in Fig. 2) kommt. In einem weiteren Schritt S2 wird dabei das Stromsignal I des Aktuators 2 abgetastet (siehe ggf. Fig. 3). Dieser Schritt wird bis zur Beendigung des Verfahrens ausgeführt. In einem Schritt S3 wird analysiert, ob das Stromsignal I eine erste Bedingung erfüllt. Als erste Bedingung ist bspw. gesetzt, dass das Stromsignal I unterhalb eines bestimmten Wertes liegt, um bspw. einen Einschaltpeak aus der Analyse auszuschließen. Ist die Bedingung 1 nicht erfüllt (S3=N), erfolgt weiterhin ein Abtasten und eine Analyse der Stromwerte I. Ist die Bedingung 1 erfüllt (S3=Y), wird in einem nächsten Schritt S4 analysiert, ob das Stromsignal I eine zweite Bedingung erfüllt. Als zweite Bedingung ist definiert, dass das Stromsignal I einen stetigen Rückgang zeigt, bspw. dass vier aufeinander folgende fallende Messwerte ermittelt wurden. Ist die zweite Bedingung nicht erfüllt (S4=N), wird die Analyse fortgeführt, bis das Verfahren abgebrochen wird oder die Bedingung erfüllt wird (S4=Y). Weiterhin wird nach Erfüllung der Bedingung 1 (S3=Y) in einem weiteren Schritt S5 analysiert, ob das Stromsignal I eine dritte Bedingung erfüllt. Als dritte Bedingung ist definiert, dass das Stromsignal I einen abklingenden Rückgang zeigt, bspw. dass drei geringer werdende Differenzbeträge (siehe bspw. d1, d2, d3 in Fig. 3) zwischen den vier aufeinander folgenden fallenden Messwerten vorliegen. Ist die dritte Bedingung nicht erfüllt (S5=N), wird die Analyse fortgeführt, bis das Verfahren abgebrochen wird oder die Bedingung erfüllt wird (S5=Y). Ist die zweite Bedingung (S4=Y) und die dritte Bedingung (S5=Y) erfüllt (&), wird in Schritt S6 der Übergangspunkt an dieser Stelle definiert. Alternativ ist auch denkbar, dass eine sequentielle Überprüfung der Bedingungen stattfindet, d.h. die Bedingung 3 erst überprüft wird, wenn die Bedingung 2 erfüllt wurde. Ebenfalls ist denkbar, dass nur eine der beiden Bedingungen 2 oder 3 überprüft wird und der Übergangspunkt an der Stelle definiert wird an welcher die eine Bedingung zusätzlich zur Bedingung 1 erfüllt wird.

Die Fig. 5 zeigt eine Positionierung der Feststellbremse 13 nach, bzw. bei einem Lösevorgang. Weiterhin ist ein wegabhängiger Verlauf der Klemmkraft F gezeigt, welche bei Betätigung des Bremsaktuators 2 der Feststellbremse 13 erzeugt wird. Da die Feststellbremse 13 auch eingesetzt werden kann, um ein Abbremsen des Fahrzeugs zu ermöglichen, wird synonym der Begriff Bremskraft verwendet, welcher die durch die Feststellbremse 13 aufgebrachte Bremskraft beschreiben soll. Die bei Betätigung des Aktuators 2 während eines Schließvorgangs erzeugte Brems- oder Klemmkraft F liegt zunächst, ausgehend von einer Ausgangsposition $x_A$, beim Wert 0 und steigt nach dem Erreichen des Übergangspunktes $x_U$ linear an. Der Übergangspunkt definiert den Übergang von der Leerwegphase zu der Kraftaufbau, bzw. von der Kraftabbauphase zu der Leerwegphase. Am Übergangspunkt xu, liegt der Bremskolben 5 bzw. der Bremsbelag 8, 8' am Bremskolben 5 erstmalig, bzw. letztmalig auf Kontakt zur Bremsscheibe 7. Der Übergangspunkt $x_U$ der Feststellbremse kann daher auch als Bremskontaktpunkt bezeichnet werden. Die Ausgangsposition $x_A$ des Bremskolbens 5 der Feststellbremse 13 kennzeichnet einen bremsmomentfreien Ausgangszustand, d.h. eine offene Position der Feststellbremse 13. Der zurückzulegende Weg zwischen der Ausgangsposition $x_A$ und dem Übergangspunkt $x_U$ wird als Leerweg $\Delta x_L$ bezeichnet. Mit dem Aufbringen einer Bremskraft, bzw. Klemmkraft F während eines Brems- bzw. Zuspannvorgangs erreicht der Bremskolben eine Endposition $x_E$, die sich hinter dem Übergangspunkt $x_U$ befindet und deren genaue Position von der Höhe der aufzubringenden Bremskraft, bzw. Klemmkraft F abhängt. Die Endposition $x_E$ beschreibt damit eine geschlossene Position der Feststellbremse 13.

Wird die zugespannte Feststellbremse 13 gelöst, indem der Aktuator 2 so angesteuert wird, dass sich der Bremskolben 5 mittels der Spindelmutter 4 in Richtung der Ausgangsposition $x_A$ bewegt, so nimmt die Klemmkraft F bis zum Erreichen des Übergangspunktes $x_U$ ab und verharrt anschließend während dem weiteren Weg (Leerweg) auf dem Nullniveau. Der Übergang der Klemmkraft F vom Kraftabbau zum Nullniveau im Übergangspunkt $x_U$ kann anhand des abknickenden Verlaufs einer elektromotorischen Zustandsgröße des Aktuators 2 festgestellt werden, insbesondere anhand des Motorstroms I, gegebenenfalls auch anhand der Motorgeschwindigkeit.

Mithilfe einer beispielhaften Ausführung des Verfahrens kann mittels eines Positionierungsvorgangs die Feststellbremse 13 an einem Bremsstartpunkt xs positioniert werden, der zwischen der bremsmomentfreien Ausgangsposition $x_A$ und dem Übergangspunkt xu liegt. Der Bremsstartpunkt xs befindet sich noch innerhalb des Leerwegs $\Delta x_L$, jedoch mit geringem Abstand zu dem Übergangspunkt $x_U$. Nimmt die Spindelmutter 4, bzw. der Bremskolben 5 die Position am Bremsstartpunkt xs ein, so kann der verbleibende Leerweg $\Delta x_R$ bis zum Erreichen des Übergangspunktes $x_U$ und dem darauf folgenden Kraftaufbau in kurzer Zeit zurückgelegt werden. Zugleich kann gewährleistet werden, dass ein hinreichend großes Lüftspiel zwischen den Bremsbelägen 8, 8' und der Bremsscheibe 7 besteht, um bspw. ein versehentliches, unerwünschtes Schleifen der Bremsbeläge 8, 8' an der Bremsscheibe 7 innerhalb des auftretenden Temperaturbereiches sicher auszuschließen.

Die Festlegung des Bremsstartpunktes xs erfolgt damit ausgehend von dem Übergangspunkt $x_u$ mit einem definierten Abstand hierzu in Löserichtung der Feststellbremse 13. Basierend auf dem ermittelten Übergangspunkt $x_u$, wird bei einem Lösevorgang der Feststellbremse die Spindelmutter 4 der Feststellbremse 13 einen weiteren Positionierungsweg $\Delta x_P$ in Richtung der Ausgangsposition $x_A$ bewegt, bis der Bremsstartpunkt $x_S$ erreicht ist. In dieser Position verbleibt die Spindelmutter 4 bis ein Bremseingriff mittels der Feststellbremse 13 angefordert wird oder das Verfahren beendet wird. Bei einer Anforderung einer Bremskraft oder Klemmkraft F der Feststellbremse kann die Spindelmutter 4 direkt aus dem Bremsstartpunkt $x_S$ heraus aktiviert werden. Bei einer Beendigung des Verfahrens kann die Spindelmutter 4 je nach Notwendigkeit direkt aus dem Bremsstartpunkt $x_S$ in die Endposition $x_E$ bewegt werden (bei einem Abstellen des Fahrzeug) oder in die Ausgangsposition $x_A$ (bei einem regulären weiteren Betreiben des Fahrzeugs).

**Patentansprüche**

1. Verfahren zum Betreiben einer automatisierten Feststellbremse (13) für ein Kraftfahrzeug mit wenigstens einer Bremsvorrichtung (1) wobei die Feststellbremse (13) wenigstens zwei Zustände einnehmen kann, wobei in einem ersten Zustand keine Klemmkraft mittels der Feststellbremse (13) aufgebaut wird, und in einem zweiten Zustand eine Klemmkraft mittels der Feststellbremse (13) aufgebaut wird, wobei ein Übergangspunkt (xu) den Übergang zwischen den zwei Zuständen definiert **dadurch gekennzeichnet, dass** eine Identifikation des Übergangspunktes $(x_U)$ während eines Lösevorgangs der Feststellbremse (13) erfolgt.

2. Verfahren nach Anspruch 1, **dadurch gekennzeichnet, dass** die Identifikation des Übergangspunktes (xu) auf Basis eines zeitlichen Verlaufs einer die Klemmkraft (F) der Feststellbremse (13) repräsentierenden Größe (I) erfolgt.

3. Verfahren nach einem der vorhergehenden Ansprüche **dadurch gekennzeichnet, dass** die Identifikation des Übergangspunktes $(x_U)$ während einer Einschaltphase (P1) ausgesetzt wird.

4. Verfahren nach einem der Ansprüche 2 bis 3, **dadurch gekennzeichnet, dass** die Identifikation des Übergangspunktes $(x_U)$ begonnen wird, wenn die die Klemmkraft (F) der Feststellbremse (13) repräsentierenden Größe (I) unterhalb eines definierten Schwellenwerts liegt.

5. Verfahren nach einem der Ansprüche 2 bis 4, **dadurch gekennzeichnet, dass** bei der Identifikation des Übergangspunkts $(x_U)$ ermittelt, ob ein stetiger Rückgang eines Werteverlaufs der die Klemmkraft (F) der Feststellbremse (13) repräsentierenden Größe (I) vorliegt, wobei ein stetiger Rückgang dann erkannt wird, wenn mehrere, insbesondere 4, fallende zeitlich direkt aufeinander folgende Werte (k) ermittelt werden.

6. Verfahren nach einem der Ansprüche 2 bis 5, **dadurch gekennzeichnet, dass** der Übergangspunkt $(x_U)$ erkannt wird, wenn eine Änderung eines Werteverlaufs der die Klemmkraft (F) der Feststellbremse (13) repräsentierenden Größe (I) ermittelt wird.

7. Verfahren nach einem der Ansprüche 2 bis 6, **dadurch gekennzeichnet, dass** der Übergangspunkt $(x_U)$ erkannt wird, wenn ein geringer werdender Rückgang eines Werteverlaufs der die Klemmkraft (F) der Feststellbremse (13) repräsentierenden Größe (I) ermittelt wird,
wobei ein geringer werdender Rückgang erkannt wird,

   - wenn mehrere, insbesondere 3, geringer werdende Differenzbeträge (d1, d2, d3) von zeitlich direkt aufeinander folgenden Werte (k) ermittelt werden,

   und/oder

   - wenn mehrere, insbesondere 3, Differenzbeträge (d1, d2, d3) der zeitlich direkt aufeinander folgenden Werte (k) jeweils niedriger als ein dem jeweiligen Differenzbetrag (d1, d2, d3) zugeordneten Schwellenwert (a, b, c) sind, wobei insbesondere die Schwellenwerte (a, b, c) gleich sind oder eine Verringerung der Schwellenwerte (a, b, c) entsprechend dem zeitlichen Rang der zugeordneten Differenzbeträge (d1, d2, d3) vorliegt.

8. Verfahren nach einem der Ansprüche 2 bis 7, **dadurch gekennzeichnet, dass** zur Identifikation des Übergangspunktes $(x_U)$ der zeitliche Verlauf der die Klemmkraft (F) der Feststellbremse (13) repräsentierenden Größe (I) während einer Kraftabbauphase (P2) ausgewertet wird,

9. Verfahren nach einem der Ansprüche 2 bis 8, **dadurch gekennzeichnet, dass** bei der Ermittlung der die Klemmkraft (F) der Feststellbremse (13) repräsentierenden Größe (I)

   - ein Stromwert (I) eines Feststellbremsaktuators (2) und/oder
   - eine Spannung eines Feststellbremsaktuators (2) und/oder
   - eine Motorwinkelgeschwindigkeit eines Feststellbremsaktuators (2) berücksichtigt wird.

10. Verfahren nach einem der vorhergehenden Ansprüche, **dadurch gekennzeichnet, dass** der ermittelte Übergangspunktes $(x_U)$ bei einem Betreiben der Feststellbremse (13), insbesondere als Referenzwert, berücksichtigt wird.

11. Verfahren nach einem der vorhergehenden Ansprüche, **dadurch gekennzeichnet, dass** unter Berücksichtigung des ermittelten Übergangspunktes (xu) erfolgt:

   - ein Positionieren der Feststellbremse (13), und/oder

- ein Positionieren der Feststellbremse (13) direkt aus der Kraftabbauphase (P2) heraus und/oder

- ein Positionieren der Feststellbremse (13) direkt von einem Endpunkt ($x_E$) der Feststellbremse (13) heraus und/oder

- ein Positionieren der Feststellbremse (13) in einer Leerwegphase (P4) und/oder

- ein Positionieren der Feststellbremse (13) in einem Bremsstartpunkt ($x_S$), wobei insbesondere ein reduzierter Leerweg ($\Delta x_R$) der Feststellbremse (13) eingestellt, wobei insbesondere der reduzierte Leerweg ($\Delta x_R$) im Vergleich zum regulären Leerweg ($\Delta x_L$) reduziert ist.

12. Steuergerät (9) zum Betreiben einer automatisierten Feststellbremse (13) für ein Kraftfahrzeug, wobei die Feststellbremse (13) wenigstens zwei Zustände einnehmen kann, wobei in einem ersten Zustand keine Klemmkraft (F) mittels der Feststellbremse (13) aufgebaut wird, und in einem zweiten Zustand eine Klemmkraft (F) mittels der Feststellbremse (13) aufgebaut wird, wobei ein Übergangspunkt (xu) den Übergang zwischen den Zuständen definiert, **dadurch gekennzeichnet, dass** das Steuergerät (9) Mittel aufweist und eingerichtet ist, um eine Übergangspunkt ($x_U$) während einem Lösevorgang der Feststellbremse (13) zu identifizieren.

13. Automatisierte Feststellbremse (13) für ein Kraftfahrzeug, wobei die Feststellbremse (13) wenigstens zwei Zustände einnehmen kann, wobei in einem ersten Zustand keine Klemmkraft (F) mittels der Feststellbremse (13) aufgebaut wird, und in einem zweiten Zustand eine Klemmkraft (F) mittels der Feststellbremse (13) aufgebaut wird, wobei ein Übergangspunkt (xu) den Übergang zwischen den Zuständen definiert, **dadurch gekennzeichnet, dass** die Feststellbremse (13) Mittel aufweist und eingerichtet ist, um einen Übergangspunkt ($x_U$) während einem Lösevorgang der Feststellbremse (13) zu identifizieren.

## Claims

1. Method for operating an automated parking brake (13) for a motor vehicle with at least one brake device (1), wherein the parking brake (13) can adopt at least two states, wherein in a first state no clamping force is established by means of the parking brake (13), and in a second state a clamping force is established by means of the parking brake (13), wherein a transition point (xu) defines the transition between the two states, **characterized in that** the identification of the transition point (xu) is carried out during a parking brake releasing process (13).

2. Method according to Claim 1, **characterized in that** the identification of the transition point ($x_U$) is carried out based on a time profile of a variable (I) representing the clamping force (F) of the parking brake (13).

3. Method according to any one of the preceding claims, **characterized in that** the identification of the transition point ($x_U$) is suspended during a switch-on phase (PI).

4. Method according to any one of Claims 2 to 3, **characterized in that** the identification of the transition point ($x_U$) is started if the variable (I) representing the clamping force (F) of the parking brake (13) lies below a defined threshold value.

5. Method according to any one of Claims 2 to 4, **characterized in that** during the identification of the transition point ($x_U$) it is determined whether there is a continuous decline of a profile of values of the variable (I) representing the clamping force (F) of the parking brake (13), wherein a continuous decline is identified if a plurality of, in particular 4, decreasing chronologically directly successive values (k) are determined.

6. Method according to any one of Claims 2 to 5, **characterized in that** the transition point ($x_U$) is identified if a change of a profile of values of the variable (I) representing the clamping force (F) of the parking brake (13) is determined.

7. Method according to any one of Claims 2 to 6, **characterized in that** the transition point (xu) is identified if a decreasing decline of a profile of values of the variable (I) representing the clamping force (F) of the parking brake (13) is determined, wherein a decreasing decline is identified

- if a plurality of, in particular 3, decreasing difference amounts (d1, d2, d3) of chronologically immediately successive values (k) are determined,

and/or

- if a plurality of, in particular 3, difference amounts (d1, d2, d3) of the chronologically immediately successive values (k) are each smaller than a threshold value (a, b, c) associated with the respective difference amounts (d1, d2, d3), wherein in particular the threshold values (a, b, c) are equal or there is a reduction of the threshold values (a, b, c) according to the chronological ranking of the associated difference amounts (d1, d2, d3) .

8. Method according to any one of Claims 2 to 7, **characterized in that** the time profile of the variable (I) representing the clamping force (F) of the parking brake (13) is evaluated during a force reduction phase (P2) for the identification of the transition point ($x_U$).

9. Method according to any one of Claims 2 to 8, **characterized in that** during the determination of the variable (I) representing the clamping force (F) of the parking brake (13), the following is taken into account

   - a current value (I) of a parking brake actuator (2) and/or
   - a voltage of a parking brake actuator (2) and/or
   - a motor angular rate of a parking brake actuator (2).

10. Method according to any one of the preceding claims, **characterized in that** the determined transition point (xu) is taken into account during the operation of the parking brake (13), in particular as a reference value.

11. Method according to any one of the preceding claims, **characterized in that** while taking into account the determined transition point (xu) the following is carried out:

   - positioning the parking brake (13), and/or
   - positioning the parking brake (13) directly from the force reduction phase (P2) and/or
   - positioning the parking brake (13) directly from an end point ($x_E$) of the parking brake (13) and/or
   - positioning the parking brake (13) in a free travel phase (P4) and/or
   - positioning the parking brake (13) at a braking starting point ($x_S$), wherein in particular a reduced free travel ($\triangle x_R$) of the parking brake (13) is set, wherein in particular the reduced free travel ($\triangle x_R$) is reduced compared to the usual free travel ($\triangle x_L$).

12. Control unit (9) for operating an automated parking brake (13) for a motor vehicle, wherein the parking brake (13) can adopt at least two states, wherein in a first state no clamping force (F) is established by means of the parking brake (13), and in a second state a clamping force (F) is established by means of the parking brake (13), wherein a transition point (xu) defines the transition between the states, **characterized in that** the control unit (9) comprises means for identifying and is designed to identify a transition point ($x_U$) during a parking brake releasing process (13).

13. Automated parking brake (13) for a motor vehicle, wherein the parking brake (13) can adopt at least two states, wherein in a first state no clamping force (F) is established by means of the parking brake (13), and in a second state a clamping force (F) is established by means of the parking brake (13), wherein a transition point (xu) defines the transition between the states, **characterized in that** the parking brake (13) comprises means for identifying and is designed to identify a transition point (xu) during a parking brake releasing process (13).

**Revendications**

1. Procédé d'utilisation d'un frein de stationnement automatique (13) destiné à un véhicule automobile comprenant au moins un dispositif de freinage (1), le frein de stationnement (13) pouvant prendre au moins deux états, aucune force de serrage n'étant appliquée dans un premier état au moyen du frein de stationnement (13) et une force de serrage étant appliquée dans un deuxième état au moyen du frein de stationnement (13), un point de transition (xu) définissant la transition entre les deux états, **caractérisé en ce qu'**une identification du point de transition ($x_U$) est effectuée pendant le desserrage du frein de stationnement (13).

2. Procédé selon la revendication 1, **caractérisé en ce que** l'identification du point de transition (xu) est effectuée sur la base d'une variation dans le temps d'une grandeur (I) représentant la force de serrage (F) du frein de stationnement (13).

3. Procédé selon l'une des revendications précédentes, **caractérisé en ce que** l'identification du point de transition ($x_U$) est interrompue pendant une phase de mise en service (P1).

**4.** Procédé selon l'une des revendications 2 et 3, **caractérisé en ce que** l'identification du point de transition (xu) est démarrée lorsque la grandeur (I) représentant la force de serrage (F) du frein de stationnement (13) est inférieure à un seuil défini.

**5.** Procédé selon l'une des revendications 2 à 4, **caractérisé en ce que** l'on détermine lors de l'identification du point de transition ($x_U$) s'il y a une diminution constante d'une variation de valeur de la grandeur (I) représentant la force de serrage (F) du frein de stationnement (13), une diminution constante n'étant détectée que lorsque l'on détermine que plusieurs, notamment 4, valeurs (k) immédiatement consécutives dans le temps diminuent.

**6.** Procédé selon l'une des revendications 2 à 5, **caractérisé en ce que** le point de transition ($x_U$) est détecté lorsque l'on détecte une variation de valeur de la grandeur (I) représentant la force de serrage (F) du frein de stationnement (13).

**7.** Procédé selon l'une des revendications 2 à 6, **caractérisé en ce que** le point de transition (xu) est détecté lorsque l'on détermine une diminution de la variation de valeur de la grandeur (I) représentant la force de serrage (F) du frein de stationnement (13), une diminution étant détectée,

- lorsque plusieurs, en particulier 3, valeurs de différence décroissantes (d1, d2, d3) sont déterminées à partir de valeurs (k) immédiatement consécutives dans le temps,

et / ou

- lorsque plusieurs, en particulier 3, valeurs de différence (d1, d2, d3) des valeurs (k) immédiatement consécutives dans le temps sont inférieures à un seuil (a, b, c) associé à la valeur de différence respective (d1, d2, d3), les seuils (a, b, c) étant en particulier égaux ou une réduction des seuils (a, b, c) étant présente en fonction du rang dans le temps des valeurs de différence associées (d1, d2, d3).

**8.** Procédé selon l'une des revendications 2 à 7, **caractérisé en ce que** la variation dans le temps de la grandeur (I) représentant la force de serrage (F) du frein de stationnement (13) est évaluée pendant une phase de réduction de force (P2) pour identifier le point de transition (xu).

**9.** Procédé selon l'une des revendications 2 à 8, **caractérisé en ce que**

- une valeur de courant (I) d'un actionneur de frein de stationnement (2) et/ou
- une tension d'un actionneur de frein de stationnement (2) et/ou
- une vitesse angulaire de moteur d'un actionneur de frein de stationnement (2)

sont prises en compte lors de la détermination de la grandeur (I) représentant la force de serrage (F) du frein de stationnement (13).

**10.** Procédé selon l'une des revendications précédentes, **caractérisé en ce que** le point de transition ($x_U$) déterminé est pris en compte, notamment comme valeur de référence, lors de l'actionnement du frein de stationnement (13).

**11.** Procédé selon l'une des revendications précédentes, **caractérisé en ce que**

- un positionnement du frein de stationnement (13), et/ou
- un positionnement du frein de stationnement (13) directement à partir de la phase de réduction de force (P2) et/ou
- un positionnement du frein de stationnement (13) directement à partir d'un point final ($x_E$) du frein de stationnement (13) et/ou
- un positionnement du frein de stationnement (13) dans une phase de course à vide (P4) et/ou
- un positionnement du frein de stationnement (13) dans un point de démarrage de frein ($x_S$), une course à vide réduite ($\Delta x_R$) du frein de stationnement (13) étant notamment réglée, la course à vide réduite ($\Delta x_R$) étant réduite à la course à vide régulière ($\Delta x_L$),

étant effectués lors de la prise en compte du point de transition ($x_U$).

**12.** Appareil de commande (9) destiné à actionner un frein de stationnement automatique (13) d'un véhicule automobile, le frein de stationnement (13) pouvant prendre au moins deux états, aucune force de serrage (F) n'étant appliquée dans un premier état au moyen du frein de stationnement (13) et une force de serrage (F) étant appliquée dans un deuxième état au moyen du frein de stationnement (13), un point de transition $(x_u)$ définissant la transition entre les deux états, **caractérisé en ce que** l'appareil de commande (9) comporte des moyens prévus pour identifier un point de transition $(x_U)$ pendant le desserrage du frein de stationnement (13).

13. Frein de stationnement automatique (13) pour véhicule automobile, le frein de stationnement (13) pouvant prendre au moins deux états, aucune force de serrage (F) n'étant appliquée dans un premier état au moyen du frein de stationnement (13) et une force de serrage (F) étant appliquée dans un deuxième état au moyen du frein de stationnement (13), un point de transition $(x_U)$ définissant la transition entre les deux états, **caractérisé en ce que** le frein de stationnement (13) comporte des moyens prévus pour identifier un point de transition $(x_U)$ pendant le desserrage du frein de stationnement (13).

Fig. 1

EP 3 297 878 B1

## Fig. 2

Fig. 3

EP 3 297 878 B1

**Fig. 4**

Fig. 5

**IN DER BESCHREIBUNG AUFGEFÜHRTE DOKUMENTE**

**In der Beschreibung aufgeführte Patentdokumente**

- DE 201410220252 A1
- US 2010262329 A1